# EUROPEAN PATENT APPLICATION

(11) **EP 3 048 544 A1**
(43) Date of publication of application: **27.07.2016**
(21) Application number: 15152255.4
(22) Date of filing: 23.01.2015
(51) Int. Cl.: G06F 17/50, G06T 17/00

(54) **Method for generating CAD models**

(71) Applicant: ABB Technology AG, 8050 Zürich (CH)
(72) Inventor: Taguchi, Adalberto, Cary, NC 27513 (US); Ortiz, Jacopo M., 53604 Bad Honnef (DE)
(74) Representative: Eickmeyer, Dietmar

(57) **Abstract**

The invention is related to a method for generating CAD models (28) by use of a CAD system (60) with a computing unit (62) and a CAD software product running thereon, comprising the following steps:
• providing a CAD library (24) with templates (32) of CAD component models (34, 42) which are adjustable by respective template parameters,
• providing a CAD library (26) with feature models (44), which are adjustable by respective feature parameters and can be added to a respective CAD component model (34, 42),
• providing a command list (14), with instructions and information about
o which CAD component model (34, 42) has to be generated and which features models (44) are added thereto,
o template parameters of the CAD component model (34, 42) to be generated,
o feature parameters of the features model (44) which are added to the CAD component model (34, 42) to be generated,

• instantiating the template (32) of the respective CAD component model (34, 42) to be generated with the desired template parameters according to the command list (14) so that a CAD component model (34, 42) is derived therefrom,
• adding respective feature models (44) with the respective feature parameters according to the command list (14) to the CAD component model (34, 42),
• saving the adjusted CAD component model with added features (46) to a memory.

## Description

The invention is related to a method for generating CAD models by use of a CAD system with a computing unit and a CAD software product running thereon.

It is known that CAD systems are used to construct a product in a virtual environment before it is produced in reality. This enables a flexible and fast design process since possible mistakes in the construction are easily detectable and can become eliminated accordingly in the virtual environment. A respective product which might be represented by a CAD model is for example a high voltage transformer which is arranged within a vessel. A CAD model comprises a set of data and/or instructions, which clearly describes at least the geometry of a part of a product or of the whole product. Typically a CAD model can be stored within a file or in the memory of a computing unit. In order to facilitate the design of a CAD model of a product, CAD systems typically comprise a library with standard components such as screws or connectors, which can be used as integral part of the product. In this case several CAD component models have to be merged to a CAD assembly model.

In case of an assembly of several CAD component models respective assembly parameters have to be known, especially clearly defined coupling coordinates of the respective CAD component models. So it is possible to place all CAD component models with a clearly defined geometrical relationship to the same coordinate system, so that the CAD assembly model can become handled as one part.

Having such a CAD model it is possible to place it in a virtual 3D environment of the CAD system for example, but it is also possible to derive construction plans therefrom and to print them on a paper. It might also be possible to print a part list of the required components of a CAD assembly model.

Disadvantageously within the state of the art is that each required component has to be provided in the CAD libraries even there might be groups of generic components, which differ only slightly each from each other. A further disadvantage of the state of the art is that references of CAD models typically are identified by internal identifiers, which makes it very difficult to derive an easily comprehensible nomenclature for the single CAD components therefrom.

The objective of the invention is to provide a method for generating CAD models which avoids those disadvantages.

The problem is solved by a method for generating CAD models of the aforementioned kind. This is characterized by the following steps:
- providing a CAD library with template CAD models whose dimensions and parameters are adjustable,
- providing a CAD library with template CAD features, whose dimensions and parameters are adjustable, and which can be added to CAD models therefore enhancing them,
- providing a command list, with instructions and information about
   ∘ which CAD component model has to be generated, with its corresponding dimensions and parameters,
   ∘ which CAD features has to be created, with its corresponding dimensions and parameters, and to which model has to be added to,
   ∘ where CAD component models have to be assembled and how,
- instantiating the templates of the CAD model library (along with associated drawings), so the required components get generated with the desired dimensions and parameters, according to the command list,
- instantiating the templates of the CAD feature library, and adding to the respective CAD models with the respective feature dimensions and parameters, according to the command list,
- adding respective feature models with the respective feature parameters according to the command list to the CAD component model,
- saving the adjusted CAD component models with their assigned features to a memory.

The basic idea of the invention is, based on a library of generic template models and a library of predefined CAD features, to automatically create CAD models, including any CAD feature required, and assemble them in accordance to a specified structure. A command file with a set of instructions and parameters for an automated processing of the steps of the method is foreseen, wherein such command files are comparable with a batch file in the widest sense. So it is possible to adapt for example one parameter within the command file, for example the nomenclature of the components, and a new order specific CAD model is automatically derived therefrom, wherein each CAD component has the right nomenclature. Moreover, it is also possible to provide a CAD template model with variable geometric or parametric characteristics, so it can become sized or stretched and/or its parameters modified.

The entire method for generating CAD models relies preferably on model and assembly reference names, what makes it extremely flexible, considering that while geometry and references may be physically changed in the CAD library template models, the set of instructions in the command file remains unchanged and the process of automatic generation of CAD models still works.

In contrast thereto changes to pre-assembled CAD models may break the assemblies considering that references are identified by internal identifiers instead of names like in this new method.

The CAD library contains generic template models (parts or assemblies) with their corresponding drawings whenever necessary. The CAD component models contain the basic geometry, named dimensions and/or parameters and named assembly references that will be used during the automated generation process of CAD models The CAD library of features contains a set of saved features which will be added to the CAD component models during the automated execution of the method according to the invention so that the CAD models are enhanced there through. These features are typically driven by named dimensions and/or parameters and named assembly references.

The instructions used for driving the automated process are:
- Instantiating the template of the respective CAD component model to be generated with the desired template parameters according to the command list so that a CAD component model is derived therefrom
- Adding respective feature models with the respective feature parameters according to the command list to the CAD component model and
- Assembling the specified CAD models in a certain structure, according to the command list.

The "instantiating template" instruction provides the information to the CAD software product, which template model to retrieve from the CAD library, which parameters and dimensions have to be updated including the values that have to be assumed and optionally the new model name to be used after the instantiation. In the case that drawings are associated with these models, those drawings will also be instantiated in the same way (e.g. renamed).

The "adding features" instruction provides the information to the CAD software product, which target model for the feature addition has to be taken, which template features have to be retrieved from the library, which parameters and dimensions have to be updated as well as the values that have to be assigned, and optionally the new feature name to be used after it is created by the placement respectively addition (optional).

The "assembly" instruction provides the information to the CAD software product, which target model has to be taken and where to assemble it (which CAD assembly), as well as all references needed for executing such operation (from the model being assembled and for the model receiving it). Optionally, extra information can be given in the instructions to uniquely identify instances of the same component (i.e. when they are assembled more than once).

After finalizing the adjusted CAD component model it is stored into a memory, for example the memory of the computing unit respectively it is stored as a set of files. Thus it is possible to dynamically generate CAD models on demand with specific parameters.

According to a preferred embodiment of the invention the template-, feature- and/or assembly parameters comprise information about the nomenclature of the CAD component model respectively CAD assembly model to be generated. Thus it is possible to provide information about the desired nomenclature of the CAD models at one single location - the command list - so that a CAD model is adaptable in an easy way.

According to a further embodiment of the invention the CAD component models respectively the CAD assembly models contain named parameters and/or named references. When initiating the template of the CAD model component to be generated respectively when adjusting it, the nomenclature provided in the template-, feature- and/or assembly parameters is automatically applied thereon. Thus a specific nomenclature of a CAD model is realized in an easy way.

According to an embodiment of the invention the templates of the CAD component models contain the respective basic geometry of the respective components with respective adjustable dimensions. So a component such as a plate might be stretched or scaled according to a respective template parameter. Also the inner radius of a cylinder, the thickness of a plate or the Identification number of the component itself are examples of suitable template parameters.

According to a further embodiment of the invention the feature models contain the respective basic geometry of the feature with respective adjustable dimensions. This might be for example a feature "hole", "slit" or "cavity" which is adjustable in its shape by respective dimensions such as length or height. Typically each of the feature models has a reference point of its coordinate system, so that a clear attachment coordinate relative to the coordinate system of a CAD component model can be defined.

According to another embodiment of the invention the dimensions of the features are derived at least in part from the dimensions of the respective CAD component model respectively the template parameters related thereto. In case that a feature "hole" is attached to a component "plate" for example the position of the hole relative to the plate is a required feature parameter. In case of a through-hole the depth of the hole corresponds to the thickness of the plate so that no further parameter for the depth of the hole is required.

According to another embodiment of the invention the complete set of instructions in the command list is analyzed and executed in a sequence in which the required information for assembly is already integrated in the corresponding CAD component model. In this embodiment the instructions in the command list do not have a defined order. Moreover, the complete set of instructions is automatically analyzed and a suitable sequence of processing is derived therefrom. The basic rule behind it is to determine the sequence of processing in that way that instructions which require as input the output of another instruction are not processed until all required input such as references, parameters, CAD component models and so on are available.

According to another embodiment of the invention the CAD library with templates of CAD component models comprises a template of an adjustable CAD assembly model. Such a template might comprise a cylinder placed in a hole of a plate for example.

Further advantageous embodiments of the invention are mentioned in the dependent claims.

The invention will now be further explained by means of an exemplary embodiment and with reference to the accompanying drawings, in which:
- Figure 1: shows an exemplary overview on the method for generating CAD models,
- Figure 2: shows an example for instantiating a template of a component model,
- Figure 3: shows an example for adding a feature,
- Figure 4: shows an example for assembling a model and
- Figure 5: shows an exemplary CAD system.

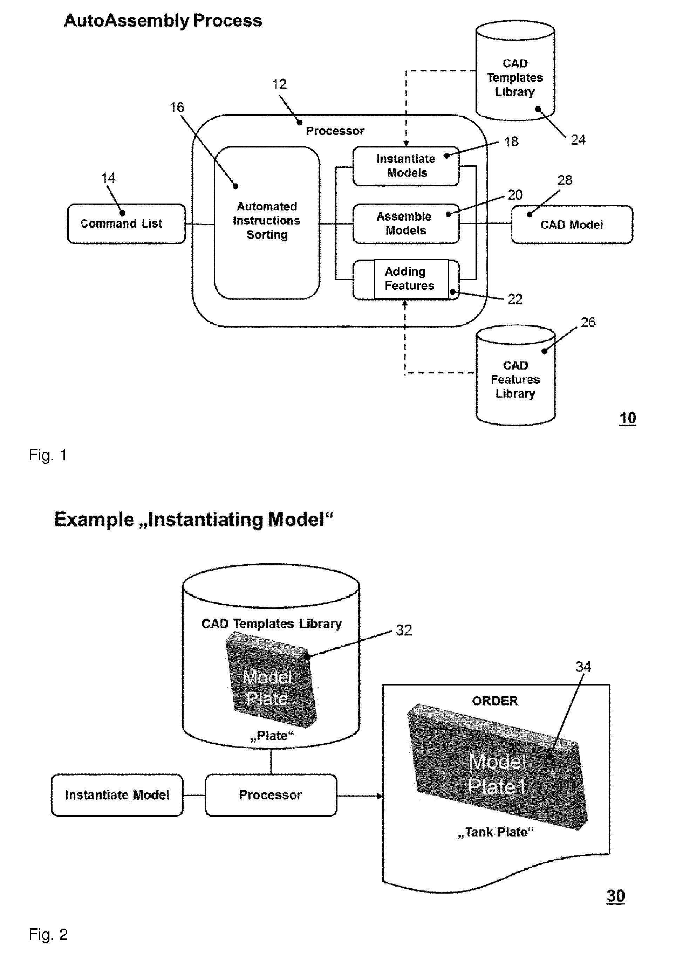

Figure 1 shows an exemplary overview on the method for generating CAD models in a sketch 10. A processor 12 with a calculation capability is provided by a computing unit and connected to a CAD template library 24 and a CAD feature library 26. A command list 14 comprises instructions and information about which CAD component model has to be generated and which features models are added thereto. The command list 14 further comprises template parameters of the CAD component model to be generated and feature parameters of the features model which are added to the CAD component model to be generated.

In a step 16, the automated instruction sorting, the complete set of instructions in the command list is analyzed and executed in a sequence in which the required information for assembly is integrated in the corresponding CAD component model.

In a step 18, the instantiating of models, templates for all required CAD component models are loaded from the CAD template library and instantiated with the respective template parameters from the command list 16. In the end a CAD component model is derived therefrom.

In a step 20, the assembling of the models, the single CAD component models are assembled respectively merged together to a CAD assembly model according to the instructions and data in the command list 14. All components of the CAD assembly model are related to the same coordinate system so that it can be treated as one single part.

In a step 24, the adding of features, additional features such as a hole or a slit are added to the CAD assembly model. The features are derived from templates in the CAD feature library and added to the CAD assembly model according to instructions and feature parameters within the command list 14.

In principal the sequence of the steps of processing the instructions of the command list 14 is chosen in that way, that instructions which require as input the output of another instruction are not processed until all required input such as references, parameters, CAD component models and so on are available. So it is possible - dependent on the CAD model to be assembled, that either the assigning of features 22 is done for each component model before the step of assembling 20 is done or the assigning of features 22 is done for the whole assembly after assembling 20. Of course a combination of both is also possible for larger CAD models. In the end a CAD model 28 is generated, which might be a CAD assembly model or even an adjusted CAD component model.

Fig. 2 shows an example for instantiating a template of a component model in a sketch 30. An unadjusted template of a CAD component model 32, in this case a square shaped plate, is instantiated by a processor according to respective template parameters. In the end an adjusted CAD component model of a stretched rectangular plate 34 with adapted name is derived therefrom.

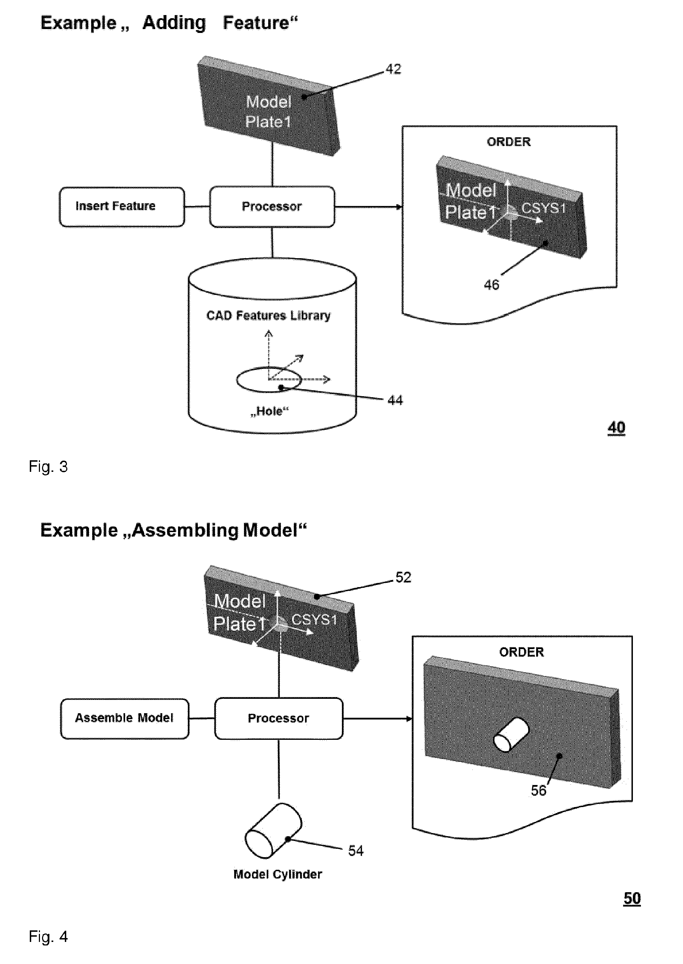

Fig. 3 shows an example for adding a feature in a sketch 40. An adjusted CAD component model 42, in this case a rectangular shaped plate, is enhanced with a feature model 44 of a CAD features library. The feature is in this case a hole with a variable diameter. The feature is added to the adjusted CAD component model 40 according to feature parameters. In the end an adjusted CAD component model with added feature 46 is derived therefrom.

Fig. 4 shows an example for assembling a model in a sketch 50. An adjusted CAD component model with assigned feature (hole) 52 and further adjusted CAD component model 54 of a cylinder with the same diameter than the hole is provided from a previous step of the method of generating CAD models. Both components 52 and 54 are assembled respectively merged together to a CAD assembly model according to instructions and assembly data in the command list.

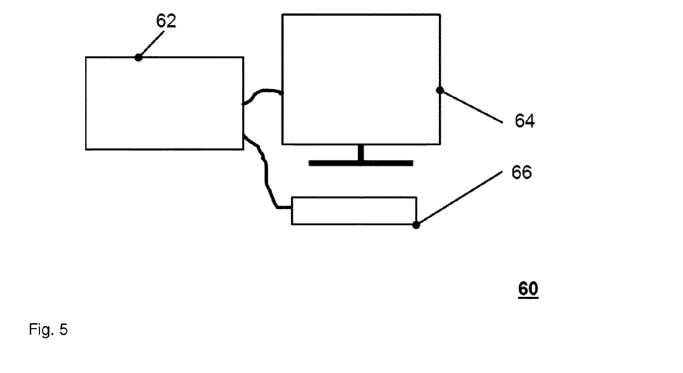

Fig. 5 shows an exemplary CAD system in a sketch 60, wherein the CAD system comprises the components computing unit 62, visual output device 64 and input device 66. A CAD software product is running on the computing unit 62.

### List of reference signs

- 10: exemplary overview on method for generating CAD models
- 12: processor
- 14: command list
- 16: automated instruction sorting
- 18: instantiating of model
- 20: assembling of model
- 22: assigning features
- 24: CAD library with templates of component models
- 26: CAD library with feature models
- 28: CAD model
- 30: example for instantiating a template of a component model
- 32: unadjusted template of a CAD component model
- 34: adjusted CAD component model
- 40: example for assigning a feature
- 42: adjusted CAD component model without assigned features
- 44: feature model
- 46: adjusted CAD component model with assigned feature
- 50: example for assembling a model
- 52: adjusted CAD component model with assigned feature
- 54: further adjusted CAD component model
- 56: CAD assembly model
- 60: exemplary CAD system
- 62: computing unit
- 64: visual output device
- 66: input device

## Claims

1. Method for generating CAD models (28) by use of a CAD system (60) with a computing unit (62) and a CAD software product running thereon, comprising the following steps:
• providing a CAD library (24) with templates (32) of CAD component models (34, 42) which are adjustable by respective template parameters,
• providing a CAD library (26) with feature models (44), which are adjustable by respective feature parameters and are assignable to a respective CAD component model (34, 42),
• providing a command list (14), with instructions and information about
∘ which CAD component model (34, 42) has to be generated and which features models (44) are assigned thereto,
∘ template parameters of the CAD component model (34, 42) to be generated,
∘ feature parameters of the features model (44) which are added to the CAD component model (34, 42) to be generated,
• instantiating the template (32) of the respective CAD component model (34, 42) to be generated with the desired template parameters according to the command list (14) so that a CAD component model (34, 42) is derived therefrom,
• adding respective feature models (44) with the respective feature parameters according to the command list (14) to the CAD component model (34, 42),
• saving the adjusted CAD component model with added features (46) to a memory.

2. Method according to claim 1, wherein the command list (14) comprises template and feature parameters of at least two CAD component models (34, 42) to be merged to a CAD assembly model (56) and wherein the command list (14) further comprises assembly parameters with information about how the CAD component models (34, 42) have to be merged, comprising the following steps:
• generating a respective adjusted CAD component model (34, 42) for all components to be merged together according to the respective template and feature parameters in the command list (14),
• generating a CAD assembly model (56) from the adjusted CAD component models (34, 42) according to the respective assembly parameters in the command list (14),
• saving the CAD assembly model (56) to a memory, wherein in this case the adjusted single CAD component models (34, 42) have not necessarily to be saved to a memory.

3. Method according to claim 1 or 2, **characterized in that** the template-, feature- and/or assembly parameters comprise information about the nomenclature of the CAD component model (34, 42) respectively CAD assembly model (56) to be generated.

4. Method according to claim 3, **characterized in that** the CAD component models (34, 42) respectively the CAD assembly models (56) contain named parameters and/or named references.

5. Method according to any of the previous claims, **characterized in that** the templates (32) of the CAD component models (34, 42) contain the respective basic geometry of the respective components with respective adjustable dimensions.

6. Method according to any of the previous claims, **characterized in that** the feature models contain the respective basic geometry of the feature with respective adjustable dimensions.

7. Method according to claim 6, **characterized in that** the dimensions of the features are derived at least in part from the dimensions of the respective CAD component model (34, 42) respectively the template parameters related thereto.

8. Method according to any of the previous claims, **characterized in that** the complete set of instructions in the command list (14) is analyzed and executed in a sequence in which the required information for assembly is already integrated in the corresponding CAD component model (34, 42).

9. Method according to any of the previous claims, **characterized in that** CAD library (24) with templates (32) of CAD component models (34, 42) comprises a template of an adjustable CAD assembly model.
